# EUROPEAN PATENT SPECIFICATION

(11) **EP 1 818 756 B1**
(45) Date of publication and mention of the grant of the patent: **22.05.2019**
(21) Application number: 07101092.0
(22) Date of filing: 24.01.2007
(51) Int. Cl.: G06F 1/16

(54) **A leather coating structure for a case and method for manufacturing thereof**
Lederschichtanordnung für ein Gehäuse und Herstellungsverfahren dafür
Structure de revêtement de cuir pour un boîtier et son procédé de fabrication

(30) Priority: 25.01.2006 CN 200610001762
(43) Date of publication of application: 15.08.2007
(73) Proprietor: ASUSTeK Computer Inc., Peitou, Taipei City (TW)
(72) Inventor: Lin, San-Fang, Taipei (TW); Chiu, Hui-Wen, Taipei (TW); Chen, Yen-Yu, Taipei (TW)
(74) Representative: Viering, Jentschura & Partner mbB Patent- und Rechtsanwälte

(56) References cited:
- FR-A- 2 817 704
- JP-A- 58 055 783
- JP-A- 2004 320 310
- US-A- 5 870 282
- US-A1- 2004 100 449
- US-B1- 6 400 562

## Description

### BACKGROUND OF THE INVENTION

### Field of Invention

The invention relates to a leather coating structure for a case and, in particular, to a separable leather coating structure for a case for a portable electronic apparatus and a method for manufacturing thereof.

### Related Art

In some portable electronic apparatus, leather material is often coated onto the user operating panel region (i.e., the surface of the upper cover) for better appearance and feeling. Take an ordinary laptop computer as an example, the conventional way of attaching the leather is to cut a piece of leather into the desired shape and then attach it to a predetermined region on the upper cover. However, the upper cover surface structure constructed by such method often has the following problems: bad cutting may distort the shape of the leather and improper cutting may result in rough edges.

The upper cover is the area that the user directly touches the most during use. The leather piece conventionally attached to the upper cover structure is likely to be peeled off or be damaged if the user constantly touches the leather edge during operations. In particular, the leather is often peeled from the bending edge.

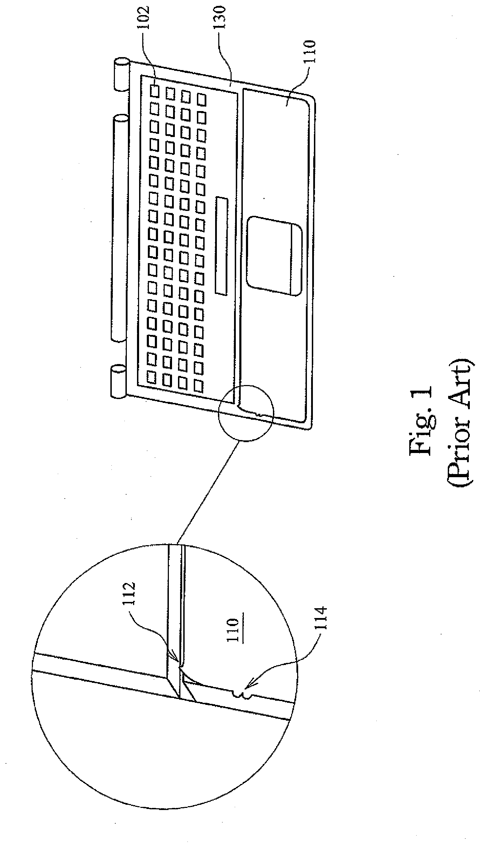

FIG. 1 is a schematic view of the upper cover 130 of a conventional laptop computer. The drawing shows that a leather coating structure 110 is directly attached onto the lower region of the keyboard 102. It shows further drawbacks that the leather is likely to have a detached surface layer 112 and a rough edge 114 if it is attached using the conventional method.

US 6400562B1 and US2004/100449 disclose a portable laptop computers with removable panels that can be mounted on the upper cover of the portable computer case hosting keyboard and touchpad. US5870282 A discloses a portable laptop computer with a removable decorative panel possibly covered with a leather coating layer that can be mounted on the external surface of the display lid.

It is therefore desirable to provide a new upper cover design that can avoid the above-mentioned damage.

### SUMMARY OF THE INVENTION

It is an objective of the invention to provide a leather coating structure for a case and the manufacturing method thereof to avoid the leather coating structure from separating from and peeling-off on the upper cover of a portable electronic apparatus.

Another objective of the invention is to provide a leather coating structure for a case and the manufacturing method thereof so that when the leather is attached improperly or a portion of the leather is damaged, another set of coating can replace it immediately without abandoning the entire upper cover.

To this end the invention provides a leather coating structure according to claim 1, and provides a method of manufacturing a leather coating structure according to claim 7. Further embodiments of the invention are disclosed in the dependent claims.

According to a preferred embodiment of the invention, the disclosed leather coating structure for a case is used for the upper cover of a laptop computer. The material of the upper cover is an aluminum-magnesium alloy or a plastic plate. The supporting plate is a plastic or metal plate. The thickness of the extended portion of the leather coating layer can be reduced down to 0.3∼0.6mm in contrast to 0.8∼1.2mm of the top portion. This can reduce the protrusion of the leather coating layer at the edge of the supporting plate. When the leather coating structure is assembled onto the upper cover of a laptop computer, the extended portion is on the inner side of the supporting plate.

When the leather coating structure has an inner opening, the disclosed leather coating structure further includes a coating frame to cover the edge of the inner opening. This prevents the edge of the leather coating layer from being exposed and peeled. The coating frame can be plastic or metal.

The disclosed leather coating structure manufacturing method is applicable to a portable electronic apparatus with a supporting plate and a leather coating layer. The supporting plate has a bottom surface inside an upper cover of the portable electronic apparatus. The method includes the steps of: attaching the leather coating layer on the supporting plate to form the leather coating structure for a case, bending the leather coating layer at the edge of the supporting plate to cover a portion of the bottom surface, and assembling the leather coating structure onto the upper cover of the portable electronic apparatus.

In a preferred embodiment of the invention, an adhesive is used to attach the leather coating layer onto the supporting plate. The leather coating structure is assembled onto the upper cover of the electronic apparatus. When the leather coating structure has an inner opening, a coating frame is used to cover the edge of the inner opening, thereby preventing the rough edges of the inner opening from being exposed.

Therefore, using the disclosed leather coating structure for a case can prevent the leather from exposing its rough edges when it is attached onto the upper cover. It also prevents the leather from peeling off if the user carelessly touches and/or rubs the edges of the leather coating layer during operation. The disclosed separable leather coating structure design allows one to readily replace the leather coating structure of the upper cover. When the operation of assembling the leather coating structure onto the upper cover fails, one only needs to replace it with another leather coating structure without abandoning the entire upper cover.

### BRIEF DESCRIPTION OF THE DRAWINGS

These and other features, aspects and advantages of the invention will become apparent by reference to the following description and accompanying drawings which are given by way of illustration only, and thus are not limitative of the invention, and wherein:
FIG. 1 is a schematic view of the conventional upper cover of a laptop computer;
FIG. 2A is an exploded view of the leather coating structure of a preferred embodiment of the invention;
FIG. 2B is a bottom view of the leather coating structure of a preferred embodiment of the invention;
FIG. 3A is a schematic view of the disclosed leather coating structure and an electronic apparatus before the assembly;
FIG. 3B is a schematic view of the disclosed upper cover and an electronic apparatus after the assembly;
FIG. 4A is a cross-sectional view of FIG. 3B along the A-A line;
FIG. 4B is a cross-sectional view of FIG. 3B along the B-B line;
FIG. 5 is a schematic view of the disclosed leather coating structure according to another embodiment of the invention; and
FIG. 6 is a flowchart of the disclosed method for manufacturing the upper cover.

### DETAILED DESCRIPTION OF THE INVENTION

The present invention will be apparent from the following detailed description, which proceeds with reference to the accompanying drawings, wherein the same references relate to the same elements.

This specification discloses an upper cover leather coating structure of a portable electronic apparatus. By combining a leather coating layer and a supporting plate while having a leather coating extended portion, it prevents the exposure of rough edges on the leather coating assembled onto the upper cover. This prevents the leather from peeling off at the edges or corners where the user constantly touches them during operations. Besides, the module design of the supporting plate enables one to readily replace the upper cover leather coating structure.

The case of the electronic apparatus referred herein is the outer shielding case for holding support of the electronic apparatus.

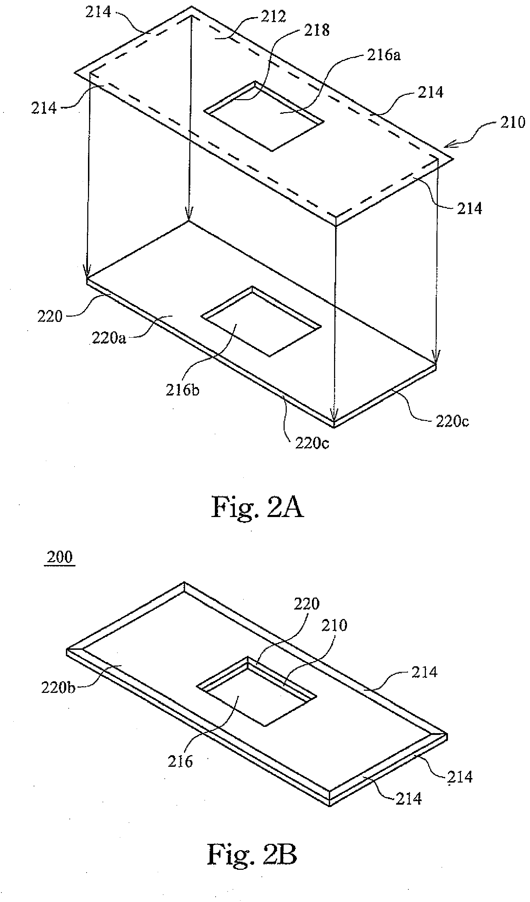

With simultaneous reference to FIGS. 2A and 2B, the leather coating structure 200 for a case includes a supporting plate 220 and a leather coating layer 210. The supporting plate 220 is assembled onto the upper cover 230 of a portable electronic apparatus. The leather coating layer 210 covers the supporting plate 220 and includes a top portion 212 and an extended portion 214.

The top portion 212 covers the top surface 220a of the supporting plate 220. The extended portion 214 extends from the top portion 212, crosses and covers the edge 220c of the supporting plate 220 and a portion of the bottom surface 220b. That is, the leather coating layer 210 corresponding to the edge 220c of the supporting plate is bended to form the extended portion 214 covering a portion of the bottom surface 220b of the supporting plate 220.

The surface of the supporting plate 220 to which the top portion 212 is attached is called the top surface 220a. Its opposite surface is called the bottom surface 220b. When the leather coating structure is assembled onto the upper cover of the electronic apparatus, the top portion 212 is exposed. The bottom surface and the extended portion covering a portion of the bottom surface are inside the upper cover.

The disclosed leather coating structure for a case includes a supporting plate and a leather coating layer covering it. The supporting material in this embodiment is a plastic plate, but not limited to this. It can be made of any other material such as a metal. In an embodiment of the invention, the leather coating layer can be NAPPA, vegetable tan, top grain, Nu buck, split leather, or oil leather. The average thickness of the top portion is 0.8∼1.2mm.

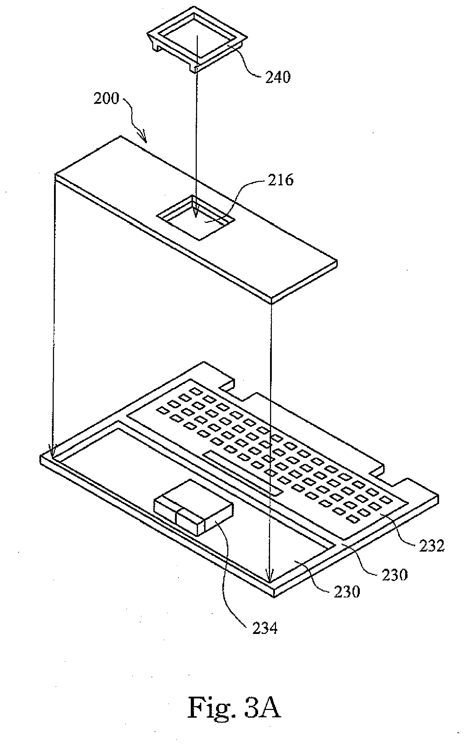

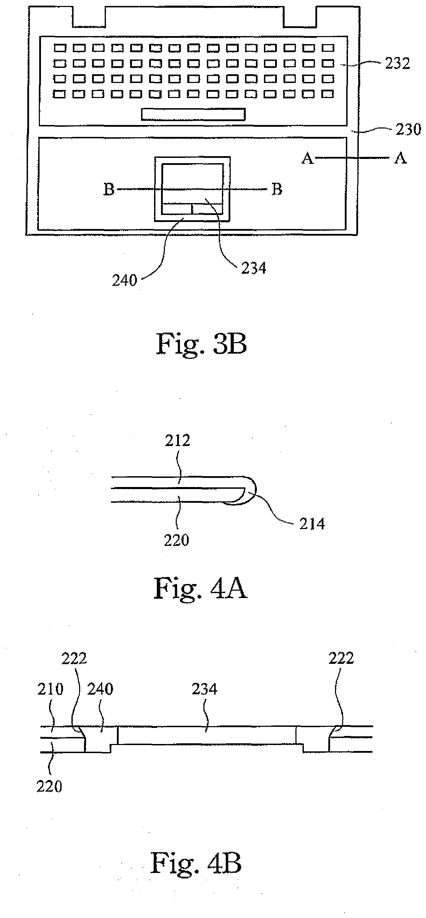

With reference to FIG. 3A and FIG. 3B, the leather coating structure 200 in a preferred embodiment is used in a laptop computer. As shown in the drawing, the upper cover region 230 contains a keyboard 232 and a touch-control panel 234 below it. The material of the upper cover 230 can be plastic or metal. This is not limited by the invention.

The leather coating structure 200 of the upper cover in this embodiment is assembled onto the surrounding area of the touch-control panel 234 and has an inner opening 216 for accommodating the touch-control panel 234. The assembly of the leather coating structure 200 on the upper cover 230 can be done by thermal fusion, adhesion, or via a fixing element, such as a hook, screw, or interference, depending upon the type of product.

Preferably, the thickness of the extended portion 214 is reduced to 0.3∼0.6mm. By decreasing the thickness of the extended portion 214, the local protrusion at the bending edge can be reduced so that it looks smoother. The edge and bottom surface of the supporting plate 220 covered by the extended portion 214 can be reduced in thickness accordingly so that the extended portion is smoothly attached to the supporting plate 220. In other embodiments of the invention, a thicker leather is allowed by thinning the edge of the supporting plate 220.

As the leather coating layer is bent at the edge of the supporting plate, it is less likely to be separated from or peeled off from the apparatus because the extended portion and the top portion form a continuous leather coating layer.

With simultaneous reference to FIG. 2A, FIG. 2B, and FIG. 4B, the leather coating structure 200 of the upper cover further includes a coating frame 240. In this embodiment, the supporting plate 220 has a supporting plate inner opening 216b corresponding to the leather coating layer inner opening 216a of the leather coating layer 210. Once the leather coating layer 210 is attached onto the supporting plate 220, the two openings together form the inner opening 216 of the leather coating structure 200 of the upper cover. The provision of this inner opening 216 is in accord with the touch-control panel input device 234. It provides an accommodating space for the touch-control panel input device 234.

When the top portion 212 of the leather coating layer 210 has an inner opening 216a, the edge 218 of the inner opening 216a cannot render a good bending due to the structural limitation. Therefore, the coating frame 240 is used to cover the edge 218 of the inner opening 216a of the leather coating layer 210. This prevents the rough edge 218 from being exposed and the material from being separated during operation. The coating frame 240 uses a plastic material. However, the material is not limited to plastic. Other materials such as metals can achieve the same effects too.

Preferably, the edge 218 of the inner opening of the leather coating layer is thinned to form a slant surface 222. In this case, the top portion 212 of the leather coating layer 210 maintains a flat surface without any protrusion after the coating frame 240 covers the edge 218.

Although the above embodiment uses the lower region of the keyboard 232 as an example to explain the position of the leather coating structure in the upper cover. However, it is not used to limit the scope of the invention. Any other region on the upper cover 230, such as the indicator region, can be implemented with the disclosed leather coating structure 200 according to needs. Such variations should be considered as part of the invention as long as they fall within the scope defined by the appended claims.

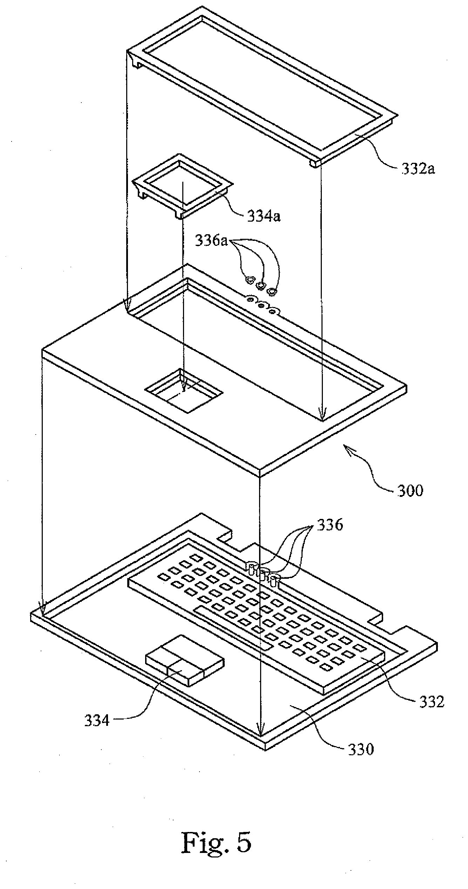

With reference to FIG. 5, another embodiment of the disclosed leather coating structure is to make a single leather coating structure on the entire upper cover region. Bending is also performed along the outer edge of the supporting plate. The inner openings for the keyboard 332, touch-control panel 334, indicator 336, and name plate (not shown) are also covered with the corresponding coating frames 332a, 334a, and 336a. The drawing shows that the leather coating structure 300 is assembled onto the upper cover 330 of an electronic apparatus.

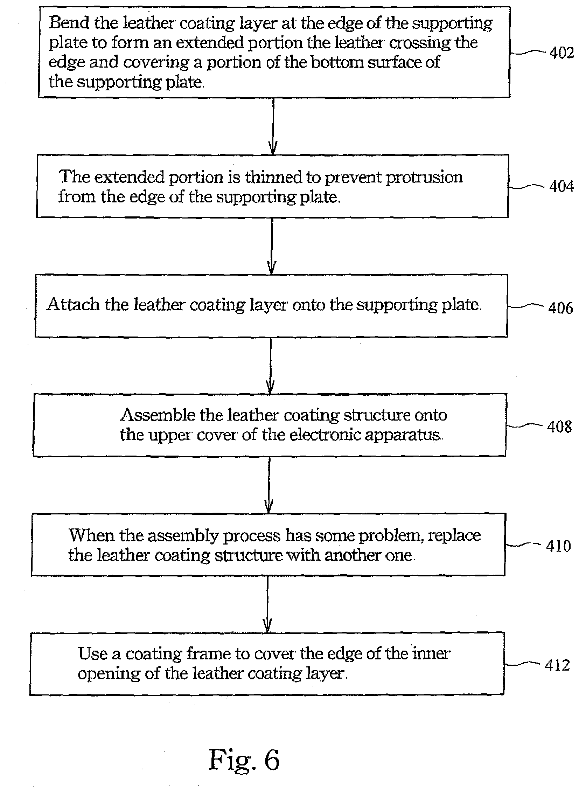

With reference to FIG. 6, the method of manufacturing the disclosed leather coating structure for a case includes the following steps: a leather coating layer is attached on a supporting plate to form a leather coating structure, the leather coating layer is bent at the edge of the supporting plate to cover a portion of the bottom surface, the leather coating structure is assembled onto the upper cover of a portable electronic apparatus.

In a preferred embodiment of the invention, the manufacturing method is applied to the leather coating structure for a case of a laptop computer. In step 402, the leather coating layer is bent at the edge of the supporting plate to form an extended portion, the leather crossing the edge and covering a portion of the bottom surface of the supporting plate. The extended portion refers to the part from the bending edge to the edge of the leather coating layer. The area of the initial leather coating layer is sufficient to cover the entire supporting plate. The area of the extra material exceeds the edge of the supporting plate as the extended portion needed in the bending step. In step 404, the extended portion is thinned to prevent protrusion from the edge of the supporting plate.

In step 406, the leather coating layer is attached onto the supporting plate. For example, a NAPPA leather material is adhered onto a plastic or metal plate using an ordinary adhesive.

In step 408, the leather coating structure is assembled onto the upper cover of the electronic apparatus. For example, the supporting plate covered with the leather coating layer is connected to the upper cover region of the laptop computer by thermal fusion, adhesion, interference, or hooks. In step 410, only another leather coating structure is required if the assembly step mentioned above has any problems, such as improper thermal fusion. The upper cover does not need to be abandoned in its entirety.

In step 412, a coating frame is further used to cover the edge of the inner opening of the leather coating layer. This prevents the rough edge of the inner opening from being exposed. It also prevents the user from peeling the leather off from its edge during operation.

It should be noted that the edge of the supporting plate refers to the outer edge of the supporting plate, different from the edge of the inner opening.

According to the preferred embodiment, the invention has at least the following advantages. The leather coating layer is bent at the edge of the supporting plate to form a extended portion. This prevents the leather from being peeled when the user is operating the electronic apparatus. Therefore, the invention can maintain the smoothness of the leather coating layer on the upper cover and hide its rough edge. The electronic apparatus thus keeps a good appearance.

Moreover, the leather coating layer is integrated on the supporting plate in such a way that when the integrated structure is inappropriately assembled to the upper cover of an ordinary electronic apparatus, one only needs to replace it with another leather coating structure without abandoning the entire upper cover. Therefore, the separable feature of the disclosed coating structure provides the advantages of easy replacement and saves the cost for a new upper cover.

While the invention has been described by way of example and in terms of the preferred embodiment, it is to be understood that the invention is not limited to the disclosed embodiments, but encompasses modifications and similar arrangements falling within the scope of the appended claims.

## Claims

1. A leather coating structure (200) assembled onto an upper cover (230) of a portable electronic apparatus, wherein the surface of the upper cover (230) forms the user operating panel region, comprising:
a supporting plate (220) having a top surface (220a) and a bottom surface (220b), wherein the bottom surface (220b) is assembled onto the upper cover (230) of the portable electronic apparatus; and
a leather coating layer (210) attached to the supporting plate (220) and having a top portion (212) covering the top surface (220a) of supporting plate (220) and an extended portion (214) extending from edges of the top portion (212) and being folded over the edges (220c) of the supporting plate (220) to cover a portion of the bottom surface (220b) of supporting plate (220);
the extended portion (214) of the leather coating layer (210) being on the inner side of the supporting plate (220) when assembled on the upper cover (230).

2. The leather coating structure (200) of claim 1, wherein the supporting plate (220) is made of a plastic material.

3. The leather coating structure (200) of claim 1, wherein the supporting plate (220) is made of a metal.

4. The leather coating structure (200) of claim 1, wherein the thickness of the extended portion (214) is thinner than the thickness of the top portion (212).

5. The leather coating structure (200) of claim 1, further comprising an adhesive layer located between the supporting plate (220) and the leather coating layer (210) for adhering thereof.

6. The leather coating structure (200) of claim 1 further comprising a coating frame (240) and the top portion (212) having an inner opening (216a), wherein the coating frame (240) covers the edge (218) of the inner opening (216).

7. A method of manufacturing a leather coating structure (200) having a supporting plate (220) with a top surface (220a), a bottom surface (220b), and a leather coating layer (210), and assembled it into the upper cover (230) of a portable electronic apparatus, wherein the surface of upper cover (230) forms the user operating panel region, the method comprising the steps of:
attaching the leather coating layer (210) having a top portion (212) covering the top surface (220a) of supporting plate (220) and an extended portion (214) extending from the edges of the top portion (212), to the supporting plate (220) to form the leather coating structure (200);
bending the leather coating layer (210) at the edge of the supporting plate (220) forming the extended portion (214) to cover a portion of the bottom surface (220b); and
assembling the leather coating structure (200) onto the upper cover (230) of the portable electronic apparatus, the extended portion (214) of the leather coating layer (210) being on the inner side of the supporting plate (220) when assembled on the upper cover (230).

8. The method of claim 7, wherein the attaching step uses an adhesive.

9. The method of claim 7 further comprising the step of thinning the extended portion (214) to reduce the protrusion at the edge (218).

10. The method of claim 7 further comprising the step of using a coating frame (240) to cover an inner opening edge (218) of the leather coating layer (210).

## Patentansprüche

1. Eine Lederbeschichtungsstruktur (200), die an einer oberen Abdeckung (230) eines tragbaren elektronischen Gerätes montiert ist, wobei die Oberfläche der oberen Abdeckung (230) den Benutzerbedienfeldbereich ausbildet, aufweisend:
eine Stützplatte (220), die eine obere Fläche (220a) und eine untere Fläche (220b) aufweist, wobei die untere Fläche (220b) an der oberen Abdeckung (230) des tragbaren elektronischen Gerätes montiert ist, und
eine Lederbeschichtungsschicht (210), die an der Stützplatte (220) angebracht ist und einen oberen Abschnitt (212), der die obere Fläche (220a) der Stützplatte (220) bedeckt, und einen verlängerten Abschnitt (214) aufweist, der sich von Rändern des oberen Abschnitts (212) aus erstreckt und über die Ränder (220c) der Stützplatte (220) gefaltet ist, um einen Abschnitt der unteren Fläche (220b) der Stützplatte (220) zu bedecken,
wobei sich der verlängerte Abschnitt (214) der Lederbeschichtungsschicht (210) bei einem Montieren an der oberen Abdeckung (230) auf der Innenseite der Stützplatte (220) befindet.

2. Die Lederbeschichtungsstruktur (200) gemäß Anspruch 1, wobei die Stützplatte (220) aus einem Kunststoffmaterial hergestellt ist.

3. Die Lederbeschichtungsstruktur (200) gemäß Anspruch 1, wobei die Stützplatte (220) aus einem Metall hergestellt ist.

4. Die Lederbeschichtungsstruktur (200) gemäß Anspruch 1, wobei die Dicke des verlängerten Abschnitts (214) dünner als die Dicke des oberen Abschnitts (212) ist.

5. Die Lederbeschichtungsstruktur (200) gemäß Anspruch 1, ferner aufweisend eine Haftschicht, die zwischen der Stützplatte (220) und der Lederbeschichtungsschicht (210) zum Kleben davon angeordnet ist.

6. Die Lederbeschichtungsstruktur (200) gemäß Anspruch 1, die ferner einen Beschichtungsrahmen (240) aufweist, und wobei der obere Abschnitt (212) eine innere Öffnung (216a) aufweist, wobei der Beschichtungsrahmen (240) den Rand (218) der inneren Öffnung (216) bedeckt.

7. Ein Verfahren zum Herstellen einer Lederbeschichtungsstruktur (200), die eine Stützplatte (220) mit einer oberen Fläche (220a), einer unteren Fläche (220b), und eine Lederbeschichtungsschicht (210) aufweist, und wobei diese in der oberen Abdeckung (230) eines tragbaren elektronischen Gerätes montiert ist, wobei die Oberfläche der oberen Abdeckung (230) den Benutzerbedienfeldbereich ausbildet, wobei das Verfahren die folgenden Schritte aufweist:
Anbringen der Lederbeschichtungsschicht (210), die einen oberen Abschnitt (212), der die obere Fläche (220a) der Stützplatte (220) bedeckt, und einen verlängerten Abschnitt (214) aufweist, der sich von den Rändern des oberen Abschnitts (212) aus erstreckt, an der Stützplatte (220), um die Lederbeschichtungsstruktur (200) auszubilden,
Umbiegen der Lederbeschichtungsschicht (210) an dem Rand der Stützplatte (220), wobei der verlängerte Abschnitt (214) ausgebildet wird, um einen Abschnitt der unteren Fläche (220b) zu bedecken, und
Montieren der Lederbeschichtungsstruktur (200) an der oberen Abdeckung (230) des tragbaren elektronischen Gerätes, wobei sich der verlängerte Abschnitt (214) der Lederbeschichtungsschicht (210) bei einem Montieren an der oberen Abdeckung (230) auf der Innenseite der Stützplatte (220) befindet.

8. Das Verfahren gemäß Anspruch 7, wobei der Schritt des Anbringens einen Klebstoff verwendet.

9. Das Verfahren gemäß Anspruch 7, ferner aufweisend den Schritt des Verdünnens des verlängerten Abschnitts (214), um den Vorsprung am Rand (218) zu verringern.

10. Das Verfahren gemäß Anspruch 7, ferner aufweisend den Schritt des Verwendens eines Beschichtungsrahmens (240), um einen inneren Öffnungsrand (218) der Lederbeschichtungsschicht (210) zu bedecken.

## Revendications

1. Structure de revêtement en cuir (200) assemblée sur un couvercle supérieur (230) d'un appareil électronique portable, où la surface du couvercle supérieur (230) forme une région de panneau opérationnel de l'utilisateur, comprenant :
une plaque de support (220) présentant une surface supérieure (220a) et une surface inférieure (220b), où la surface inférieure (220b) est assemblée sur le couvercle supérieur (230) de l'appareil électronique portable ; et
une couche de revêtement en cuir (210) fixée sur la plaque de support (220) et présentant une partie supérieure (212) qui couvre la surface supérieure (220a) de la plaque de support (220), et une partie étendue (214) s'étendant à partir des bords de la partie supérieure (212), et repliée sur les bords (220c) de la plaque de support (220) afin de couvrir une partie de la surface inférieure (220b) de la plaque de support (220) ;
la partie étendue (214) de la couche de revêtement en cuir (210) étant sur le côté intérieur de la plaque de support (220) une fois assemblée sur le couvercle supérieur (230).

2. Structure de revêtement en cuir (200) selon la revendication 1, où la plaque de support (220) est réalisée dans une matière plastique.

3. Structure de revêtement en cuir (200) selon la revendication 1, où la plaque de support (220) est réalisée en métal.

4. Structure de revêtement en cuir (200) selon la revendication 1, où l'épaisseur de la partie étendue (214) est plus mince que l'épaisseur de la partie supérieure (212).

5. Structure de revêtement en cuir (200) selon la revendication 1, comprenant en outre une couche adhésive située entre la plaque de support (220) et la couche de revêtement en cuir (210) pour faire adhérer celle-ci.

6. Structure de revêtement en cuir (200) selon la revendication 1, comprenant en outre un cadre de revêtement (240) et la partie supérieure (212) présentant une ouverture intérieure (216a), où le cadre de revêtement (240) couvre le bord (218) de l'ouverture intérieure (216).

7. Procédé de fabrication d'une structure de revêtement en cuir (200), présentant une plaque de support (220) avec une surface supérieure (220a), une surface inférieure (220b) et une couche de revêtement en cuir (210), et d'assemblage de ladite structure dans le couvercle supérieur (230) d'un appareil électronique portable, où la surface du couvercle supérieur (230) forme une région de panneau opérationnel de l'utilisateur, le procédé comprenant les étapes suivantes :
fixer la couche de revêtement en cuir (210) présentant une partie supérieure (212) qui couvre la surface supérieure (220a) de la plaque de support (220), et une partie étendue (214) s'étendant à partir des bords de la partie supérieure (212), sur la plaque de support (220) afin de former la structure de revêtement en cuir (200) ;
replier la couche de revêtement en cuir (210) au niveau du bord de la plaque de support (220) formant la partie étendue (214) afin de couvrir une partie de la surface inférieure (220b) ; et
assembler la structure de revêtement en cuir (200) sur le couvercle supérieur (230) de l'appareil électronique portable, la partie étendue (214) de la couche de revêtement en cuir (210) étant sur le côté intérieur de la plaque de support (220) une fois assemblée sur le couvercle supérieur (230).

8. Procédé selon la revendication 7, où l'étape de fixation utilise un adhésif.

9. Procédé selon la revendication 7, comprenant en outre l'étape consistant à amincir la partie étendue (214) afin de réduire la saillie au niveau du bord (218).

10. Procédé selon la revendication 7, comprenant en outre l'étape consistant à utiliser un cadre de revêtement (240) afin de couvrir un bord d'ouverture intérieure (218) de la couche de revêtement en cuir (210).
